# EUROPEAN PATENT APPLICATION

(11) **EP 4 583 505 A1**
(43) Date of publication of application: **09.07.2025**
(21) Application number: 23871994.2
(22) Date of filing: 15.09.2023
(51) Int. Cl.: H04N 7/18, H04N 5/222, H04N 5/265, H04N 21/2187, H04N 23/60

(54) **INFORMATION PROCESSING DEVICE, IMAGING SYSTEM, INFORMATION PROCESSING METHOD, PROGRAM**

(30) Priority: 29.09.2022 JP 2022157056
(71) Applicant: Sony Group Corporation, Tokyo 108-0075 (JP)
(72) Inventor: OKADA, Kazuhira, Tokyo 108-0075 (JP); IMAEDA, Kota, Tokyo 108-0075 (JP); TAHARA, Daisuke, Tokyo 108-0075 (JP)
(74) Representative: D Young & Co LLP
(86) International application number: PCT/JP2023/033689
(87) International publication number: WO 2024/070763

(57) **Abstract**

An information processing apparatus includes a translation determination unit that determines whether or not there is a translational movement forward/backward, left/right, or up/down from a fixed position on the basis of sensing data indicating a state of a camera that captures a live-action video to be used for combination with a virtual video and whose image capturing position is fixed.

## Description

### TECHNICAL FIELD

The present technology relates to an information processing apparatus, an imaging system, an information processing method, and a program, and relates to a technology in a case of combining virtual videos.

### BACKGROUND ART

There is known an augmented reality (AR) technology for combining a virtual video with a live-action video obtained by imaging a real scene and displaying the combined video.

In order to realize the AR, an AR system may acquire information of 6 degrees of freedom (Dof) estimation as a position (translation) and an attitude (rotation) of a camera. In order to estimate the position and attitude of the camera, a marker method, stereo imaging by a separate camera, use of a tripod with an encoder, and the like are known, but a relatively large configuration is required for all of them.

Patent Document 1 below discloses that an open/close state of a leg of a tripod with respect to a base, a contact state with the ground, and the like are detected, and a warning is generated according to a change in these states.

Patent Document 2 below discloses a tripod capable of performing information communication with a camera and performing power supply.

### CITATION LIST

### PATENT DOCUMENT

Patent Document 1: Japanese Patent Application Laid-Open No. 2009-138848
Patent Document 2: Japanese Patent Application Laid-Open No. 2004-45678

### SUMMARY OF THE INVENTION

### PROBLEMS TO BE SOLVED BY THE INVENTION

A case where a tripod or the like fixes a position of a camera in an imaging system that generates an AR video, and imaging is performed is considered. For example, this is a case where imaging is performed using a camera whose position is fixed by a tripod in a stadium in sports relay or the like. In that case, in order to realize the AR video, a camera attitude is only required to be estimated only by 3Dof because the camera is fixed and translation is not performed.

The present disclosure proposes a technique that enables such a system to handle an erroneous translational movement of a camera.

### SOLUTIONS TO PROBLEMS

An information processing apparatus according to the present technology includes a translation determination unit that determines whether or not there is a translational movement forward/backward, left/right, or up/down from a fixed position on the basis of sensing data indicating a state of a camera that captures a live-action video to be used for combination with a virtual video and whose image capturing position is fixed.

In a case where the image capturing position is a fixed camera, it is usually not necessary to detect the forward/backward, leftward/rightward, and upward/downward translations even if it is necessary to detect the displacement of the yaw, pitch, and roll in an imaging direction. In this case, the forward/backward, leftward/rightward, and upward/downward translations are detected so as to contribute to combination of virtual images.

An imaging system according to the present technology includes: a camera that performs image capturing and outputs video data of a captured video; a first information processing apparatus including a translation determination unit that determines whether or not there is a translational movement forward/backward, left/right, or up/down from a fixed position of the camera on the basis of sensing data indicating a state of the camera; and a second information processing apparatus that performs processing of combining a virtual video with a video captured by the camera.

### BRIEF DESCRIPTION OF DRAWINGS

Fig. 1 is an explanatory diagram of imaging by an imaging system of an embodiment of the present technology.
Fig. 2 is an explanatory diagram of an AR superimposed video.
Fig. 3 is an explanatory diagram of a system configuration of the embodiment.
Fig. 4 is an explanatory diagram of another example of the system configuration of the embodiment.
Fig. 5 is an explanatory diagram of an environment map of the embodiment.
Fig. 6 is an explanatory diagram of drift correction of the environment map of the embodiment.
Fig. 7 is a flowchart of drift amount calculation processing of the embodiment.
Fig. 8 is a flowchart of drift correction processing of the embodiment.
Fig. 9 is an explanatory diagram of a view frustum of the embodiment.
Fig. 10 is an explanatory diagram of a display example of a captured video on a focus plane of the view frustum of the embodiment.
Fig. 11 is an explanatory diagram of a bird's-eye view video including a plurality of view frustums of the embodiment.
Fig. 12 is a block diagram of an information processing apparatus of the embodiment.
Fig. 13 is a flowchart of translation determination processing of an AI board of the embodiment.
Fig. 14 is a flowchart of alert processing of a camera of the embodiment.
Fig. 15 is a flowchart of alert processing of a GUI device of the embodiment.
Fig. 16 is a flowchart of processing according to position return of the camera of the embodiment.

### MODE FOR CARRYING OUT THE INVENTION

Hereinafter, an embodiment will be described in the following order.
<1. System configuration>
<2. Configuration of information processing apparatus>
<3. Processing example>
<4. Summary and modifications>

Note that, in the present disclosure, a "video" or a "image" includes both a moving image and a still image. However, in an embodiment, a case of capturing a moving image will be described as an example.

### <1. System configuration>

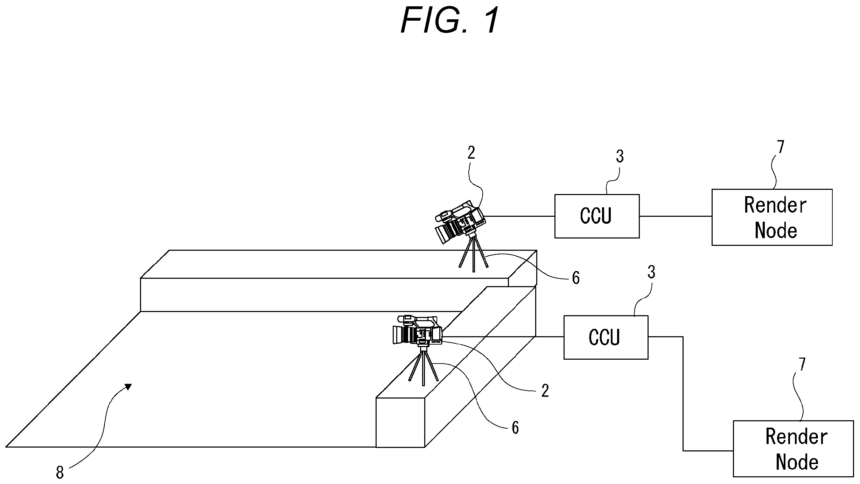

In the embodiment, an imaging system capable of generating a so-called AR video that combines a virtual video with a live-action video is taken as an example. Fig. 1 schematically illustrates a state of imaging by an imaging system.

Fig. 1 illustrates an example in which two cameras 2 are disposed in a real imaging target space 8 and imaging is performed. The two cameras are an example, and one or a plurality of cameras 2 is used.

The imaging target space 8 may be any place, and as an example, a stadium such as soccer or rugby is assumed.

In the example of Fig. 1, a fixed-type camera 2 fixedly disposed by a tripod 6 or the like is illustrated. The captured video and metadata of the fixed camera 2 are sent to a render node 7 via a camera control unit (CCU) 3.

The render node 7 described herein indicates a computer graphics (CG) engine that generates a CG and combines a CG with a live-action video, a video processing processor, and the like, and is, for example, a device that generates an AR video.

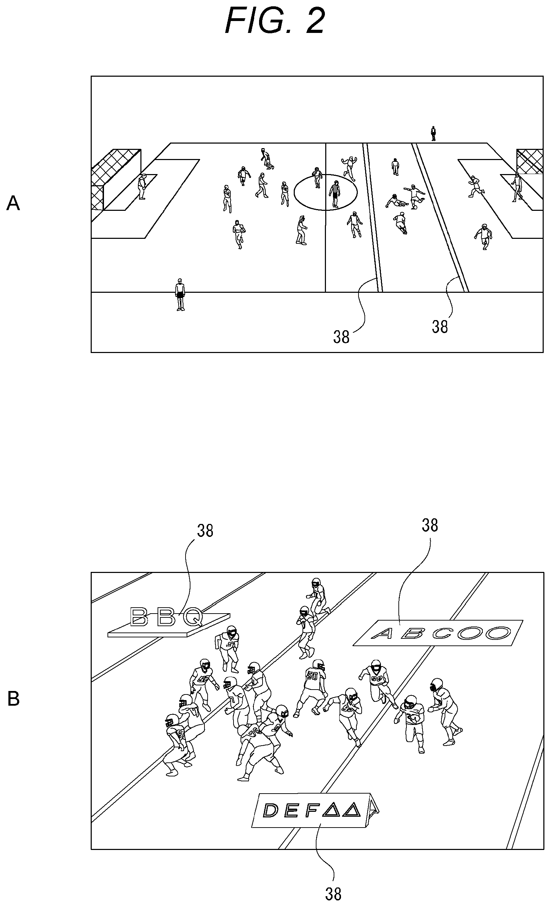

Figs. 2A and 2B illustrate examples of the AR video. In Fig. 2A, a line that does not actually exist as a CG image 38 is combined with a video captured during a game in a stadium. In Fig. 2B, an advertisement logo that does not actually exist as the CG image 38 is combined in the stadium.

By appropriately setting the shape, size, and combination position according to the position of the camera 2 at the time of imaging, the imaging direction, the angle of view, the imaged structural object, and the like, and rendering the CG image 38, it is possible to make the CG image look as if it actually exists.

In the case of the present embodiment, since the position of the camera 2 is fixed by the tripod 6, the position information is fixed. Therefore, by obtaining the attitude information of the camera 2, that is, the information of the rotation of the yaw, the pitch, and the roll, the render node 7 can appropriately combine the CG image 38 in the video captured from the viewpoint of the camera 2.

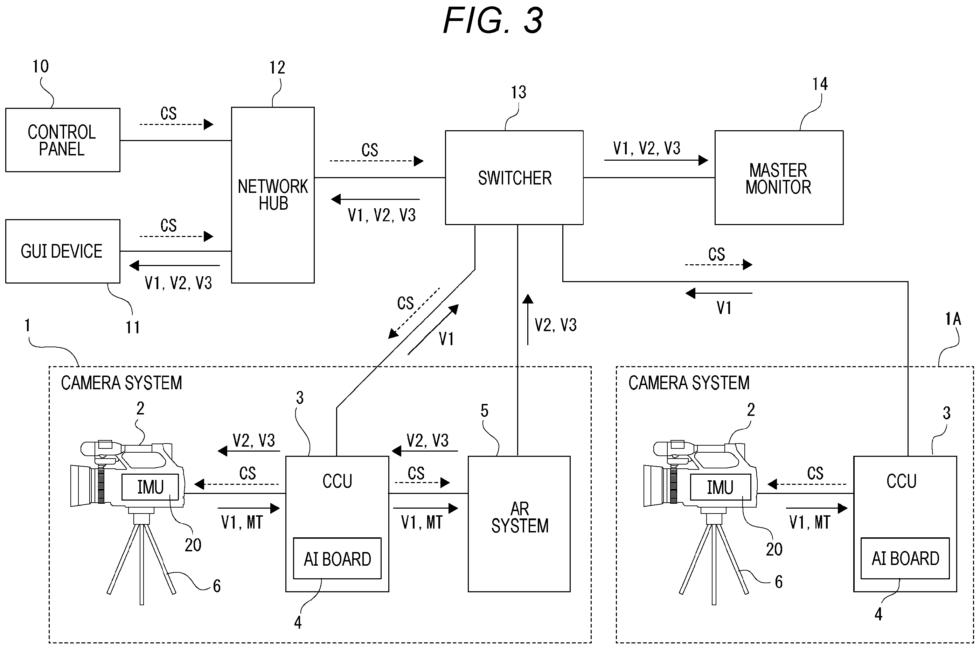

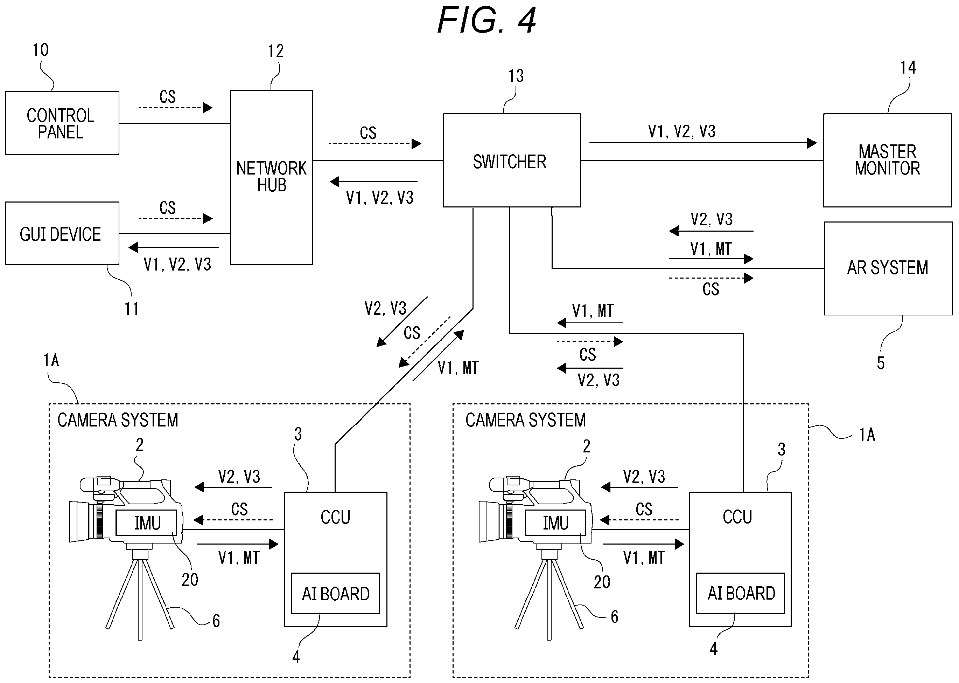

As configuration examples of the imaging system, two examples are illustrated in Figs. 3 and 4.

In the configuration example of Fig. 3, the camera systems 1 and 1A, the control panel 10, a graphical user interface (GUI) device 11, a network hub 12, a switcher 13, and a master monitor 14 are illustrated.

Broken-line arrows indicate flows of various control signals CS. Furthermore, solid arrows indicate flows of video data of the captured video V1, the AR superimposed video V2, and the bird's-eye view video V3.

The camera system 1 is configured to perform AR cooperation, and the camera system 1A is configured not to perform AR cooperation.

The camera system 1 includes a camera 2, a CCU 3, for example, an artificial intelligence (AI) board 4 and an AR system 5 built in the CCU 3.

The video data of the captured video V1 and the metadata MT are transmitted from the camera 2 to the CCU 3.

The CCU 3 sends the video data of the captured video V1 to the switcher 13. Furthermore, the CCU 3 transmits the video data of the captured video V1 and the metadata MT to the AR system 5.

Examples of the metadata MT include lens information including a zoom field angle and a focal length at the time of capturing the captured video V1, and sensor information such as an inertial measurement unit (IMU) 20 mounted on the camera 2. Specifically, these are information such as attitude information of 3DoF of the camera 2, acceleration information, a focal length of a lens, an aperture value, a zoom field angle, and lens distortion.

These pieces of metadata MT are output from the camera 2 as, for example, information synchronized with a frame or asynchronous information.

Note that, in the case of Fig. 3, the camera 2 is a fixed camera, and the position information does not change. Therefore, the camera position information may be stored in the CCU 3 or the AR system 5 as a known value.

The AR system 5 is an information processing apparatus including a rendering engine that renders CG. The information processing apparatus as the AR system 5 is an example of the render node 7 illustrated in Fig. 1.

The AR system 5 generates video data of the AR superimposed video V2 obtained by superimposing the generated CG image 38 on the video V1 captured by the camera 2. In this case, the AR system 5 sets the size and shape of the CG image 38 with reference to the metadata MT and sets the combination position in the captured video V1, thereby generating the video data of the AR superimposed video V2 in which the CG image 38 is naturally combined with the live-action landscape.

Furthermore, the AR system 5 generates video data of the bird's-eye view video V3 by the CG. For example, it is video data of the bird's-eye view video V3 reproducing the imaging target space 8 by CG.

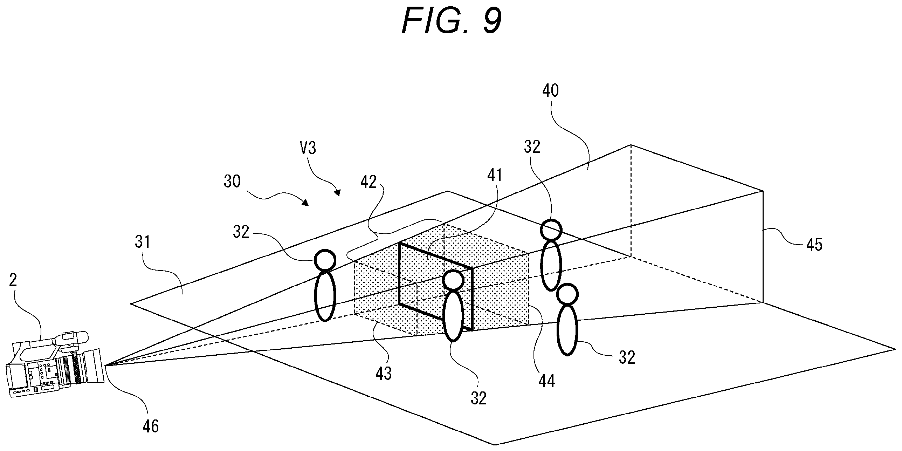

Moreover, the AR system 5 displays a view frustum 40 as illustrated in Figs. 9, 10, and 11 to be described later as an imaging range presentation video that visually presents the imaging range of the camera 2 in the bird's-eye view video V3.

For example, the AR system 5 calculates the imaging range in the imaging target space 8 from the metadata MT and the position information of the camera 2. By acquiring position information of the camera 2, an angle of view, and attitude information (corresponding to an imaging direction) of the camera 2 in three axis directions (yaw, pitch, roll) on the tripod 6, an imaging range of the camera 2 can be obtained.

The AR system 5 generates a video as the view frustum 40 according to the calculation of the imaging range of the camera 2. The AR system 5 generates video data of the bird's-eye view video V3 such that the view frustum 40 is presented from the position of the camera 2 in the bird's-eye view video V3 corresponding to the imaging target space 8.

The bird's-eye view video V3 including such a view frustum 40 enables a camera operator, a director, or the like to visually grasp the imaging range of the camera 2.

Note that, in the present disclosure, the "bird's-eye view video" is a video from a viewpoint of viewing the imaging target space 8 in a bird's-eye view, but the entire imaging target space 8 is not necessarily displayed in the image. A video including the view frustum 40 of at least some of the cameras 2 and a space around the view frustum is referred to as a bird's-eye view video.

In the embodiment, the bird's-eye view video V3 is generated by the CG as an image expressing the imaging target space 8 such as a stadium, but the bird's-eye view video V3 may be generated by a live-action image. For example, a camera 2 as a viewpoint for a bird's-eye view video may be provided, and a captured video V1 of the camera 2 may be used as a bird's-eye view video V3. Moreover, the 3D CG model of the imaging target space 8 is generated using the captured videos V1 of the plurality of cameras 2, and the viewpoint position with respect to the 3D CG model is set and rendered, so that the bird's-eye view video V3 of which the viewpoint position is variable can be generated.

The video data of the AR superimposed video V2 and the bird's-eye view video V3 by the AR system 5 is supplied to the switcher 13.

Furthermore, the video data of the AR superimposed video V2 and the bird's-eye view video V3 by the AR system 5 is supplied to the camera 2 via the CCU 3. As a result, in the camera 2, the camera operator can visually recognize the AR superimposed video V2 and the bird's-eye view video V3 on a display unit such as a viewfinder.

An AI board 4 is incorporated in the CCU 3. The AI board 4 receives the captured video V1 of the camera 2 and the metadata MT and performs various processes.

For example, the AI board 4 performs processing of calculating a drift amount of the camera 2 from the captured video V1 and the metadata MT.

At each time point, the positional displacement of the camera 2 is obtained by integrating the acceleration information from the IMU mounted on the camera 2 twice. By integrating the displacement amounts at each time point from a certain reference origin attitude (attitude position as reference in each of three axes of yaw, pitch, and roll), attitude information corresponding to the positions of three axes of yaw, pitch, and roll at each time point, that is, the imaging direction of the camera 2 can be obtained. However, as the integration is repeated, the deviation (accumulation error) between the actual attitude position and the calculated attitude position increases. The amount of the deviation is referred to as a drift amount.

In order to eliminate such drift, the AI board 4 calculates the amount of drift using the captured video V1 and the metadata MT. Then, the calculated drift amount is sent to the camera 2 side. The camera 2 receives the drift amount received from the CCU 3 (AI board 4) and corrects the attitude information of the camera 2. Then, the metadata MT including the corrected attitude information is output.

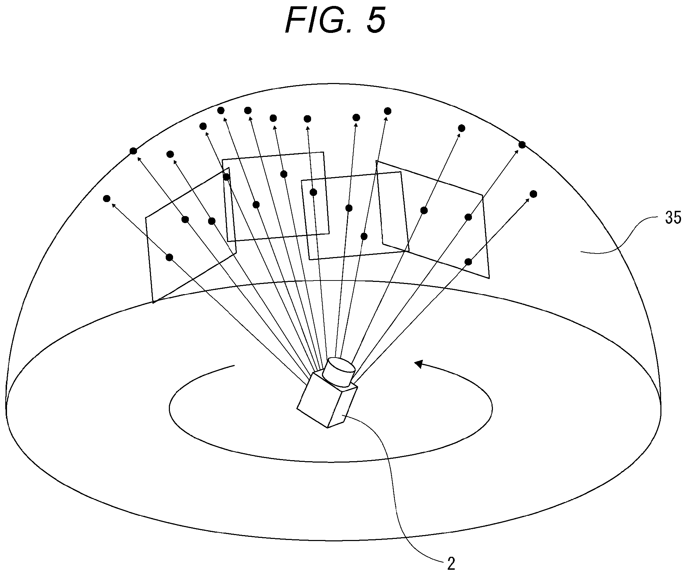

The drift correction described above will be described with reference to Figs. 5, 6, 7, and 8.

Fig. 5 illustrates an environment map 35. The environment map 35 stores feature points and feature amounts in coordinates of the virtual dome, and is generated for each camera 2.

The camera 2 is rotated by 360 degrees, and an environment map 35 in which feature points and feature amounts are registered in global position coordinates on the celestial sphere is generated. As a result, even if the attitude is lost by the feature point matching, the attitude can be restored.

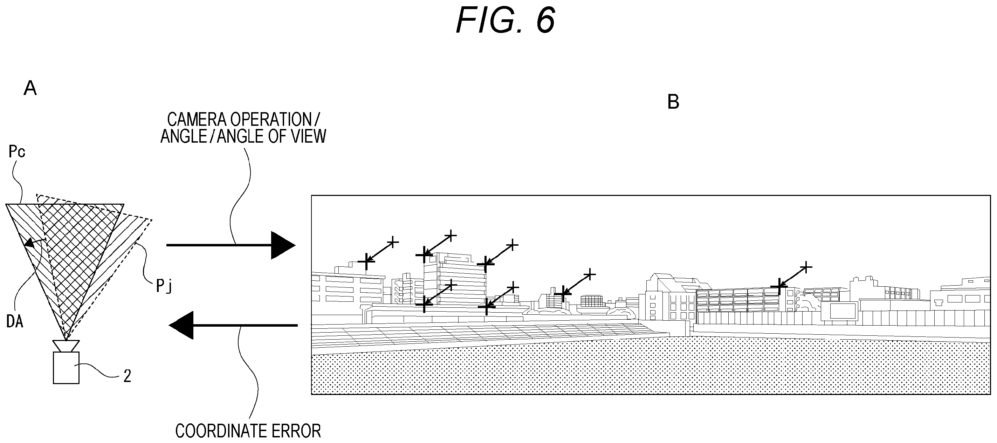

Fig. 6A schematically illustrates a state in which the drift amount DA occurs between the imaging direction Pc of the correct attitude of the camera 2 and the imaging direction Pj calculated from the IMU data.

From the camera 2 to the AI board 4, information of the operation, angle, and angle of view of the three axes of the camera 2 is sent as a guide for feature point matching. As illustrated in Fig. 6B, the AI board 4 detects the accumulated drift amount DA by feature point matching of video recognition. "+" in the drawing indicates a feature point of a certain feature amount registered in the environment map 35 and a feature point of a corresponding feature amount of the frame of the current captured video V1, and an arrow therebetween is a drift amount vector. The drift amount can be corrected by detecting the coordinate error by the feature point matching and correcting the coordinate error.

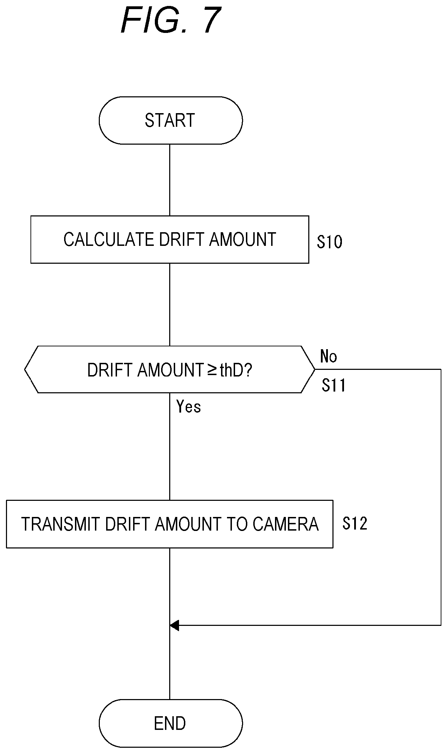

Fig. 7 illustrates a processing example of the AI board 4. The AI board 4 repeatedly executes the processing of Fig. 7.

In step S10, the AI board 4 calculates the drift amount using the environment map 35 as described above.

In step S11, the AI board 4 compares the calculated drift amount with a threshold thD. Then, when the drift amount is greater than or equal to the threshold thD, the AI board 4 proceeds to step S12 and transmits information on the drift amount to the camera 2.

Note that the drift of the attitude information occurs in each direction of yaw, pitch, and roll. That is, the amount of drift is the amount of drift in the yaw direction, the amount of drift in the pitch direction, and the amount of drift in the roll direction. For example, when at least one of them is greater than or equal to the threshold thD, the AI board 4 may proceed to step S12.

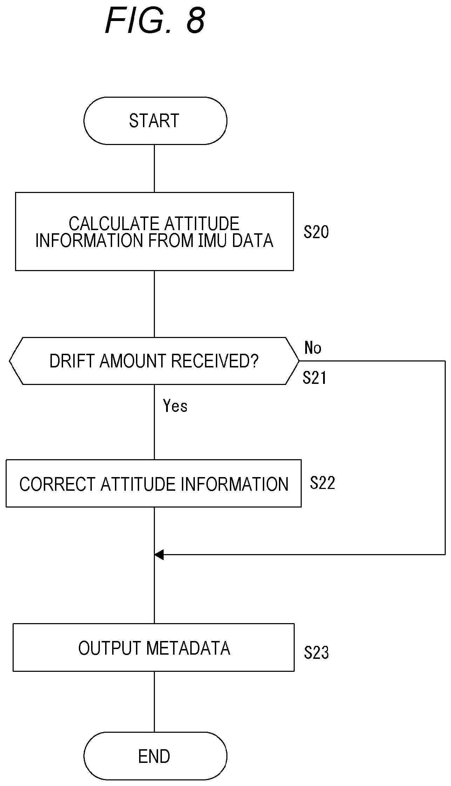

Fig. 8 illustrates a processing example of the camera 2. For example, the processing is performed by a microprocessor incorporated in the camera 2. The camera 2 performs the processing of Fig. 8 at the timing of each frame of the captured video V1, for example.

In step S20, the camera 2 calculates current attitude information from detection data of yaw, pitch, and roll obtained from the IMU 20. As described above, in the camera 2, the displacement amount in each direction of yaw, pitch, and roll at each time point is obtained, and the displacement amount is integrated, whereby the current attitude information can be obtained.

In step S21, the camera 2 confirms whether or not the drift amount has been received from the AI board 4. A case where the drift amount is received is a case where the AI board 4 determines that the drift amount is greater than or equal to the threshold thD.

In a case where the drift amount has not been received, the camera 2 outputs the metadata MT in step S23. For example, attitude information, acceleration information, a focal length, an aperture value, an angle of view, lens distortion, and the like are output as metadata MT.

On the other hand, in a case where the drift amount has been received, the camera 2 corrects the attitude information in step S22. This is a case where the error of the attitude information increases due to the integration, and the actual attitude information is obtained by correcting only the received drift amount. Then, in step S23, the camera 2 transmits the metadata MT including the corrected attitude information.

As described above, the AI board 4 obtains the drift amount by the feature point matching using the environment map 35, and the camera 2 transmits the corrected metadata MT on the basis of the drift amount, whereby the accuracy of the attitude information of the camera 2 detected on the basis of the metadata MT in the AR system 5 can be improved.

The camera system 1A in Fig. 3 includes the camera 2 and the CCU 3 and does not include the AR system 5. The video data of the captured video V1 and the metadata MT are transmitted from the camera 2 of the camera system 1A to the CCU **3.** The CCU 3 transmits the video data of the captured video V1 to the switcher 13.

The video data of the captured video V1, the AR superimposed video V2, and the bird's-eye view video V3 output from the camera systems 1 and 1A is supplied to the GUI device 11 via the switcher 13 and the network hub 12.

The switcher 13 selects a so-called main line video among the videos V1 captured by the plurality of cameras 2, the AR superimposed video V2, and the bird's-eye view video V3. The main line video is a video output for broadcasting or distribution. The switcher 13 outputs the selected video data to a transmission device, a recording device, or the like (not illustrated) as a main line video for broadcasting or distribution.

Furthermore, the video data of the video selected as the main line video is transmitted to the master monitor 14 and displayed. As a result, the video production staff can confirm the main line video.

Note that the AR superimposed video V2, the bird's-eye view video V3, and the like may be displayed on the master monitor 14 in addition to the main line video.

The control panel 10 is a device in which a video production staff performs an operation for a switching instruction of the switcher 13, an instruction related to video processing, and other various instructions. The control panel 10 outputs a control signal CS according to an operation of the video production staff. The control signal CS is transmitted to the switcher 13 and the camera systems 1 and 1A via the network hub 12.

The GUI device 11 includes, for example, a PC, a tablet device, or the like, and is a device in which a video production staff, for example, a director, or the like can confirm a video and perform various instruction operations.

The captured video V1, the AR superimposed video V2, and the bird's-eye view video V3 are displayed on the display screen of the GUI device 11. For example, in the GUI device 11, the captured videos V1 of the plurality of cameras 2 are divided into screens and displayed as a list, the AR superimposed video V2 is displayed, and the bird's-eye view video V3 is displayed. Alternatively, the GUI device 11 may display the video selected by the switcher 13 as the main line video.

An interface for a director or the like to perform various instruction operations is also prepared in the GUI device 11. The GUI device 11 outputs the control signal CS according to an operation of a director or the like. The control signal CS is transmitted to the switcher 13 and the camera systems 1 and 1A via the network hub 12.

Depending on the GUI device 11, for example, a display mode of the view frustum 40 in the bird's-eye view video V3 or the like can be instructed.

The control signal CS according to the instruction is transmitted to the AR system 5, and the AR system 5 generates video data of the bird's-eye view video V3 including the view frustum 40 in the display mode according to the instruction of the director or the like.

The example of Fig. 3 described above includes the camera systems 1 and 1A. In this case, the camera system 1 includes the camera 2, the CCU 3, and the AR system 5 as one set. In particular, by including the AR system 5, video data of the AR superimposed video V2 and the bird's-eye view video V3 corresponding to the captured video V1 of the camera 2 is generated. Then, the AR superimposed video V2 and the bird's-eye view video V3 are displayed on a display unit such as a viewfinder of the camera 2, displayed on the GUI device 11, or selected as a main line video by the switcher 13.

On the other hand, on the camera system 1A side, the video data of the AR superimposed video V2 and the bird's-eye view video V3 corresponding to the captured video V1 of the camera 2 is not generated.

Therefore, Fig. 3 illustrates a system in which the camera 2 performing the AR cooperation and the camera 2 performing the normal imaging are mixed.

The example of Fig. 4 is a system example in which one AR system 5 corresponds to each camera 2.

In the case of Fig. 4, a plurality of camera systems 1A is provided. The AR system 5 is provided independently of each camera system 1A.

The CCU 3 of each camera system 1A transmits the video data of the captured video V1 and the metadata MT from the camera 2 to the switcher 13. Then, the video data and the metadata MT of the captured video V1 are supplied from the switcher 13 to the AR system 5.

As a result, the AR system 5 can acquire the video data and the metadata MT of the captured video V1 of each camera system 1A, and can generate the video data of the AR superimposed video V2 corresponding to the captured video V1 of each camera system 1A and the video data of the bird's-eye view video V3 including the view frustum 40 corresponding to each camera system 1A. Alternatively, the AR system 5 can also generate video data of the bird's-eye view video V3 in which the view frustums 40 of the cameras 2 of the plurality of camera systems 1A are collectively displayed.

The video data of the AR superimposed video V2 and the bird's-eye view video V3 generated by the AR system 5 is transmitted to the CCU 3 of the camera system 1A via the switcher 13 and further transmitted to the camera 2. As a result, the camera operator can visually recognize the AR superimposed video V2 and the bird's-eye view video V3 on a display unit such as a viewfinder of the camera 2.

Furthermore, the video data of the AR superimposed video V2 and the bird's-eye view video V3 generated by the AR system 5 is transmitted to the GUI device 11 via the switcher 13 and the network hub 12 and displayed. As a result, the director or the like can visually recognize the AR superimposed video V2 and the bird's-eye view video V3.

In such a configuration of Fig. 4, the AR superimposed video V2 and the bird's-eye view video V3 of each camera 2 can be generated and displayed without providing the AR system 5 in each camera system 1A.

Here, the view frustum 40 will be described.

The AR system 5 can generate the bird's-eye view video V3, transmit the bird's-eye view video V3 to the viewfinder of the camera 2, the GUI device 11, or the like, and display the bird's-eye view video V3. The AR system 5 generates video data of the bird's-eye view video V3 so as to display the view frustum 40 of the camera 2 in the bird's-eye view video V3.

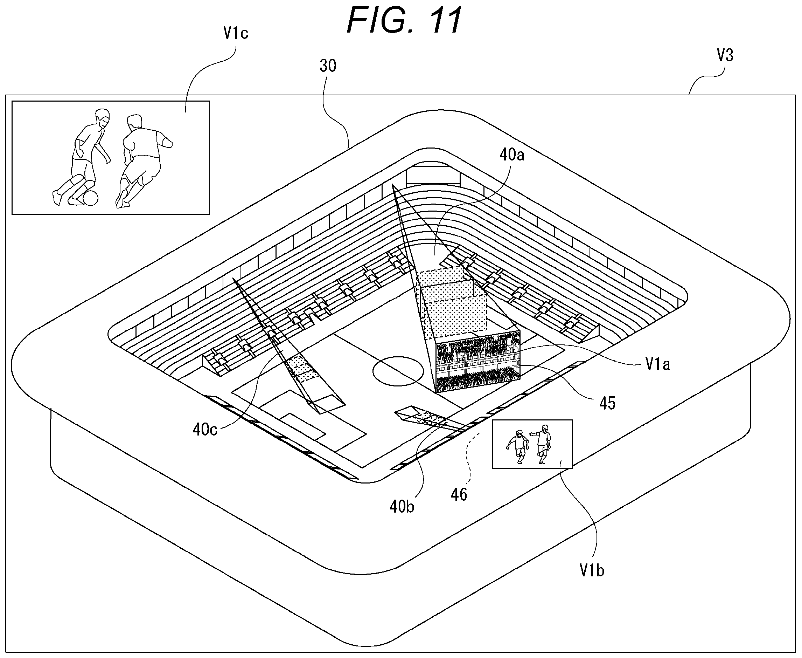

Fig. 9 illustrates an example of a view frustum 40 displayed in the bird's-eye view video V3. Fig. 9 is an example of a video by CG in a state where the imaging target space 8 of Fig. 1 is viewed in a bird's-eye view, but is illustrated in a simplified manner for the sake of description. For example, the bird's-eye view video V3 of the stadium is as illustrated in Fig. 11 to be described later.

The bird's-eye view video V3 of Fig. 9 includes, for example, a video representing a background 31 representing a stadium or the like and a person 32 such as a player. Note that Fig. 9 illustrates the camera 2, which has been described above. The bird's-eye view video V3 may or may not include the image of the camera 2 itself.

The view frustum 40 visually presents the imaging range of the camera 2 in the bird's-eye view video V3, and has a quadrangular pyramid shape spreading in the direction of the imaging optical axis with the position of the camera 2 in the bird's-eye view video V3 as the frustum starting point 46. For example, it is a quadrangular pyramid from the frustum starting point 46 to the frustum far end face 45.

The reason for the quadrangular pyramid is that the image sensor of the camera 2 is a quadrangle.

The degree of spread of the quadrangular pyramid changes depending on the angle of view of the camera 2 at that time. Therefore, the range of the quadrangular pyramid indicated by the view frustum 40 is an imaging range by the camera 2.

In practice, for example, it is conceivable that the view frustum 40 is represented by a quadrangular pyramid as a picture colored with a certain translucent color.

In the view frustum 40, a focus plane 41 and a depth of field range 42 at that time are displayed inside the quadrangular pyramid. As the depth of field range 42, for example, a range from a depth near end face 43 to the depth far end face 44 is expressed by a translucent color different from the others.

Furthermore, the focus plane 41 is also expressed by a translucent color different from others.

The focus plane 41 indicates a depth position at which the camera 2 is focused at that time. That is, by displaying the focus plane 41, it is possible to confirm that the subject at the same depth as the focus plane 41 (distance in the depth direction as viewed from the camera 2) is in the in-focus state.

Furthermore, the range in the depth direction in which the subject is not blurred can be confirmed by the depth of field range 42.

The depth to be focused and the depth of field vary depending on a focus operation or a diaphragm operation of the camera 2. Therefore, the focus plane 41 and the depth of field range 42 in the view frustum 40 vary each time.

The AR system 5 can set the spread shape of the quadrangular pyramid of the view frustum 40, the display position of the focus plane 41, the display position of the depth of field range 42, and the like by acquiring the metadata MT including information such as the focal length, the diaphragm value, and the angle of view from the camera 2. Moreover, since the attitude information of the camera 2 is included in the metadata MT, the AR system 5 can set the direction of the view frustum 40 from the camera position (frustum starting point 46) in the bird's-eye view video V3.

The AR system 5 may display the view frustum 40 and the video V1 captured by the camera 2 in which the view frustum 40 is shown in the bird's-eye view video V3.

That is, the AR system 5 generates a video of a CG space 30 to be the bird's-eye view video V3, combines the view frustum 40 generated on the basis of the metadata MT supplied from the camera 2 with the video of the CG space 30, and further combines the video V1 captured by the camera 2. The video data of the combined video is output as the bird's-eye view video V3.

An example in which the view frustum 40 and the captured video V1 in the video of the CG space 30 are simultaneously displayed in one screen will be described.

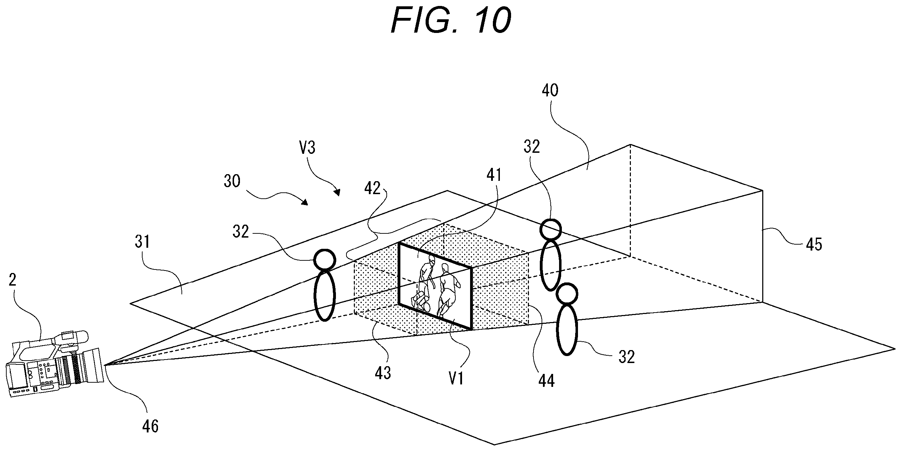

Fig. 10 illustrates an example in which the captured video V1 is displayed on the focus plane 41 in the view frustum 40. This enables visual recognition of an image captured at the focus position.

Displaying the captured video V1 on the focus plane 41 is an example.

For example, the captured video V1 may be displayed on a portion other than the focus plane 41 within the depth of field range 42. This includes the depth near end face 43, and the depth far end face 44.

Furthermore, in the view frustum 40, the captured video V1 may be displayed at a position closer to the frustum starting point 46 than the depth near end face 43 of the depth of field range 42 (the surface 47 near the frustum starting point).

Furthermore, in the view frustum 40, the captured video V1 may be displayed on the farther side than the depth far end face 44 of the depth of field range 42. For example, it is a frustum far end face 45. Note that "far" means far from the camera 2 (the frustum starting point 46).

Moreover, the captured video V1 may be displayed at a position outside the view frustum 40 in the same screen as the bird's-eye view video V3.

The example of Fig. 11 is an example in which the view frustums 40a, 40b, and 40c corresponding to the three cameras 2 are displayed in the bird's-eye view video V3. Moreover, the captured videos V1a, V1b, and V1c corresponding to the view frustums 40a, 40b, and 40c are also displayed.

The captured video V1a is displayed on the frustum far end face 45 of the view frustum 40a. The captured video V1b is displayed in the vicinity of the frustum starting point 46 of the view frustum 40b (in the vicinity of the camera position).

The captured video V1c is displayed in a screen corner. However, it is displayed in an upper left corner close to the view frustum 40c among four corners of the bird's-eye view video V3.

In this way, it is easy for the viewer to grasp the correspondence relationship between the view frustum 40 (or the camera 2) of the camera 2 and the captured video V1 by the camera 2. By displaying the captured video V1 in the vicinity of the view frustum 40, it is possible to easily grasp the relationship.

In particular, in the case of sports video production or the like, it is assumed that the view frustums 40 of the plurality of cameras 2 are displayed in the bird's-eye view video V3 as illustrated in Fig. 11. In such a case, if the relationship between the view frustum 40 and the captured video V1 is not clear, the viewer is expected to be confused. Therefore, the video V1 captured by a certain camera 2 may be displayed in the vicinity of the view frustum 40 of the camera 2.

However, there may be a case where the captured video V1 cannot be displayed in the vicinity of the view frustum 40 due to a structure, a viewpoint direction, an angle, a positional relationship between the view frustums 40, or the like in the bird's-eye view video V3, or a case where the correspondence relationship is not clear.

Therefore, for example, the color of the frame of the captured video V1 and the translucent color of the corresponding view frustum 40, the color of the contour line, or the like may be matched to indicate the correspondence.

As described above, the AR system 5 can display the view frustum 40 of the camera 2 in the CG space 30 and generate the video data of the bird's-eye view video V3 so as to simultaneously display the captured video V1 of the camera 2. Since the bird's-eye view video V3 is displayed on the camera 2 or the GUI device 11, a viewer such as a camera operator or a director can easily grasp an imaging place of each camera 2.

### <2. Configuration of information processing apparatus>

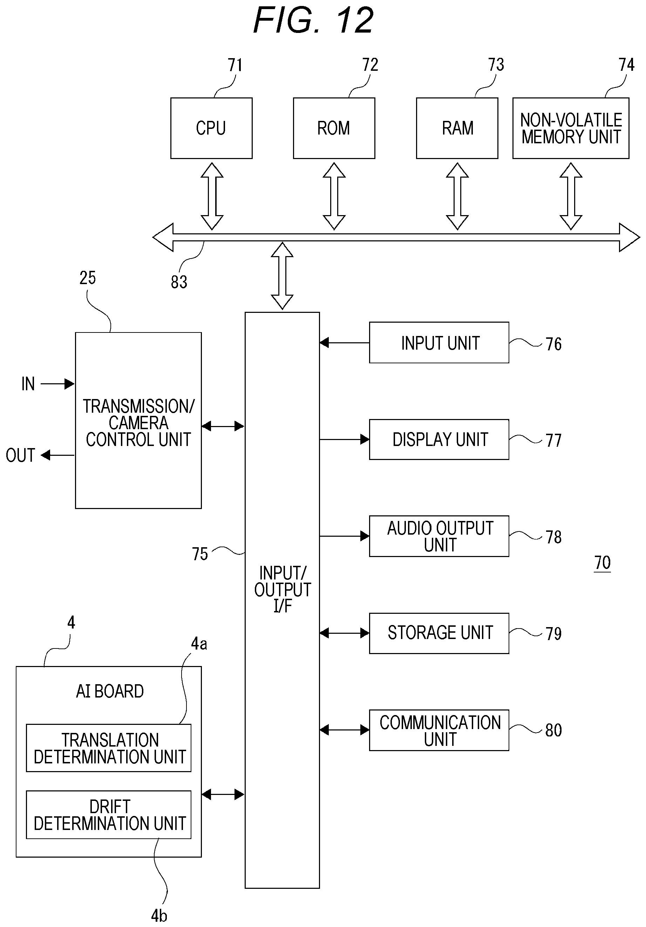

A configuration example of the information processing apparatus 70, which is, for example, the CCU 3 in the above imaging system will be described with reference to Fig. 12.

Note that, although an example of the information processing apparatus 70 that is the CCU 3 will be described here, the information processing apparatus 70 that performs the processing of the present embodiment may be realized as a device other than the CCU 3 and incorporated in the system of Fig. 3 or 4. For example, the information processing apparatus 70 may be specifically an information processing apparatus as the AR system 5, the switcher 13, the GUI device 11, or the like in addition to the CCU 3. Moreover, video editing equipment, video transmission equipment, recording equipment, or the like used in the imaging system may be used. Furthermore, the information processing apparatus 70 may be a personal computer, a workstation, a mobile terminal apparatus such as a smartphone and a tablet, and a computer apparatus configured as a server apparatus or a calculation apparatus in cloud computing.

A CPU 71 of the information processing apparatus 70 executes various processes in accordance with a program stored in a non-volatile memory unit 74 such as a ROM 72 or, for example, an electrically erasable programmable read-only memory (EEP-ROM), or a program loaded from a storage unit 79 to a RAM 73. The RAM 73 also stores, as appropriate, data and the like necessary for the CPU 71 to perform the various types of processing.

The CPU 71 is configured as a processor that performs various types of processing. The CPU 71 performs overall control processing and various arithmetic processing.

Note that, instead of the CPU 71 or in addition to the CPU 71, a graphics processing unit (GPU), a general-purpose computing on graphics processing unit (GPGPU), or the like may be provided.

The CPU 71, the ROM 72, the RAM 73, and the non-volatile memory unit 74 are connected to each other via a bus 83. Furthermore, an input/output interface 75 is also connected to the bus 83.

An input unit 76 including an operation element and an operation device is connected to the input/output interface 75. For example, as the input unit 76, various operators and operation devices such as a keyboard, a mouse, a key, a trackball, a dial, a touch panel, a touch pad, and a remote controller are assumed.

A user operation is detected by the input unit 76, and a signal corresponding to an input operation is interpreted by the CPU 71.

A microphone is also assumed as the input unit 76. It is also possible to input voice uttered by the user as operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various displays, and includes, for example, a display device provided in a housing of the information processing apparatus 70, a separate display device connected to the information processing apparatus 70, and the like. The display unit 77 performs display of various images, operation menus, icons, messages, and the like, that is, display as a graphical user interface (GUI), on a display screen on the basis of an instruction from the CPU 71.

Note that the display unit 77 may be configured as an indicator or the like by an LED or the like, and may present information by lighting, blinking, lighting color, or the like.

Furthermore, the storage unit 79 including a hard disk drive (HDD), a solid-state memory, or the like and a communication unit 80 are connected to the input/output interface 75.

The storage unit 79 can store various data and programs. A database can be configured in the storage unit 79.

The communication unit 80 performs communication processing via a transmission path such as the Internet, wired/wireless communication with various devices such as an external database, an editing device, and an information processing apparatus, bus communication, and the like.

The information processing apparatus 70 is provided with a transmission/camera control unit 25 for functioning as the CCU 3.

The transmission/camera control unit 25 receives the video data and the metadata MT of the captured video V1 from the camera 2, processes the received video data and the metadata MT, transmits the video data and the metadata MT to another device (the AR system 5, the switcher 13, or the like), and transmits a control signal to the camera 2.

The transmission/camera control unit 25 executes these processing in accordance with control of the CPU 71 communicated via the input/output interface 75.

Furthermore, the AI board 4 described above is connected to the information processing apparatus 70 via the input/output interface 75. The AI board 4 is equipped with an AI processor and realizes various arithmetic functions. In the present embodiment, the AI board 4 has functions as a translation determination unit 4a and a drift determination unit 4b.

The drift determination unit 4b is a function of executing the processing of Fig. 7 described above, whereby the CCU 3 can detect the drift of the attitude information from the camera 2 and notify the camera 2 of the drift amount.

The translation determination unit 4a is a function of performing processing of determining translation (any one of front and rear, up and down, and left and right) of the camera 2. A processing example by the translation determination unit 4a will be described later.

Note that, although the AI board 4 is provided as an example in Fig. 12, the translation determination unit 4a and the drift determination unit 4b may function as the CPU 71.

In the information processing apparatus 70, for example, software for the processing of the present embodiment can be installed via network communication or the like by the communication unit 80. Alternatively, the software may be stored in advance in the ROM 72, the storage unit 79, or the like.

Although Fig. 12 illustrates the configuration example of the information processing apparatus 70 as the CCU 3, the hardware configuration of the information processing apparatus as the AR system 5 or the GUI device 11 can be considered as, for example, a configuration in which the transmission/camera control unit 25 or the AI board 4 is removed from Fig. 12. Furthermore, the camera 2 can also be considered to have a similar hardware configuration.

### <3. Processing example>

In the imaging system of the present embodiment, the camera 2 performs imaging in a state where a position is fixed by the tripod 6. Therefore, in order to generate the AR superimposed video V2, the attitude information is transmitted from the camera 2 to the AR system 5, but it is not necessary to transmit the position information.

Moreover, the imaging system of the embodiment uses the camera 2 whose image capturing position is fixed to detect attitude changes due to displacement of yaw, pitch, and roll in the imaging direction for the AR superimposed video V2, but it is not necessary to detect front and rear, left and right, and up and down translations. This is because it is assumed that there is no translation.

For such a premise, even in the system that generates the AR superimposed video V2 as illustrated in Figs. 3 and 4, the AR system 5 is only required to acquire the information of 3Dof as the attitude information.

By eliminating the need for 6Dof information, the system configuration can be simplified. That is, a separate camera for obtaining parallax information from the video is unnecessary, and the AR system 5 is only required to acquire the captured video V1 by the camera 2. It is assumed that attitude estimation is performed only with 3Dof rotation, and it is possible to construct a system that generates an AR superimposed video without requiring special equipment.

Moreover, the attitude information of 3Dof is corrected by performing the processing of Fig. 7 and performing the processing of Fig. 8 in the camera 2 by the function of the drift determination unit 4b of the AI board 4. Therefore, the AR system 5 can generate the AR superimposed video V2 on the basis of the attitude information with high accuracy. Therefore, the quality of the AR superimposed video V2 is improved.

However, the camera 2 may translate unintentionally. For example, the tripod 6 unintentionally moves for some reason. In this case, the quality of the AR superimposed video V2 decreases for the following reason.

The AR system 5 generates a CG video using the attitude information of 3Dof.

For the attitude information, the AI board 4 performs the drift determination using the environment map 35, and notifies the camera 2 of the drift amount when the drift amount is greater than or equal to the threshold thD as illustrated in Fig. 7, for example. The camera 2 corrects the attitude information accordingly. Therefore, the accuracy of the attitude information is maintained.

However, when the translation of the camera 2 occurs, a discrepancy occurs between the environment map 35 and the position of the camera 2. This is because the environment map 35 is rotated by 360 degrees at the actual position of the camera 2 and the feature point and the feature amount are registered in the global position coordinates on the celestial sphere, and thus, when the camera 2 is translated, the environment map 35 itself is not adapted to the camera 2 after translation.

Here, since the attitude information is corrected by obtaining the drift amount using the environment map 35, if the environment map 35 is not adapted to the camera 2, the drift amount cannot be correctly obtained, and the attitude information is not accurately corrected. As a result, the accuracy of the attitude information is deteriorated, whereby the AR system 5 cannot appropriately generate the CG video, and the quality of the AR superimposed video V2 is deteriorated.

Therefore, in the present embodiment, it is determined that translation has occurred in the camera 2 by the function of the translation determination unit 4a.

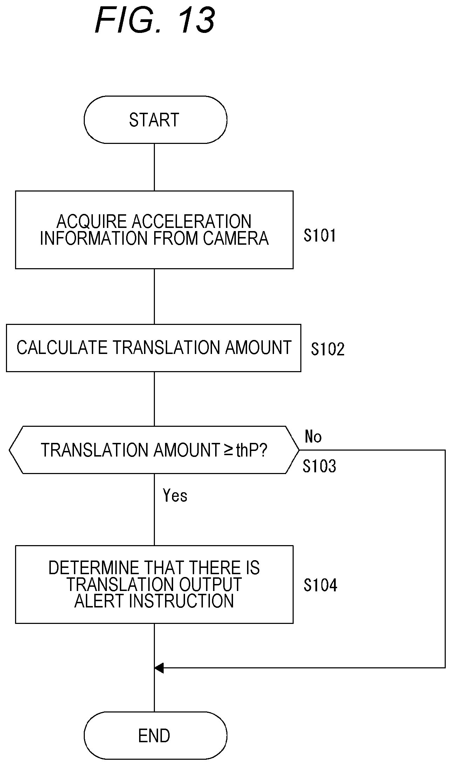

Fig. 13 illustrates a processing example of the CCU 3 by the function of the translation determination unit 4a of the AI board 4.

In step S101, the CCU 3 acquires the acceleration information from the camera 2. For example, acceleration information in each of front and rear, left and right, and up and down directions is acquired.

In step S102, the CCU 3 integrates the acceleration information twice to calculate the translation amount.

In step S103, the CCU 3 compares the translation amount with a predetermined threshold thP. Then, when the translation amount is greater than or equal to the threshold thP, the CCU 3 proceeds to step S104, determines that significant translation has occurred, and outputs an alert instruction signal. For example, an alert instruction is transmitted to the camera 2 and the AR system 5. The CCU 3 may transmit the alert instruction signal to the GUI device 11 or the control panel 10 via the switcher 13 or the like.

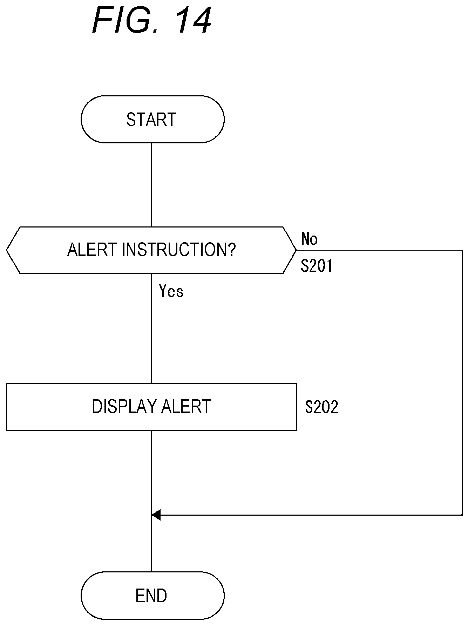

Fig. 14 illustrates a processing example corresponding to the alert instruction of the camera 2.

In the case of receiving the alert instruction signal, the camera 2 proceeds from step S201 to step S202, and displays the alert on a display unit such as a viewfinder. As a result, an operator such as a camera operator is notified that translation of the camera 2 has occurred.

For example, the GUI device 11 or the like may perform similar processing of Fig. 14, display an alert according to the alert instruction signal, and notify the director or the like that translation has occurred in the camera 2.

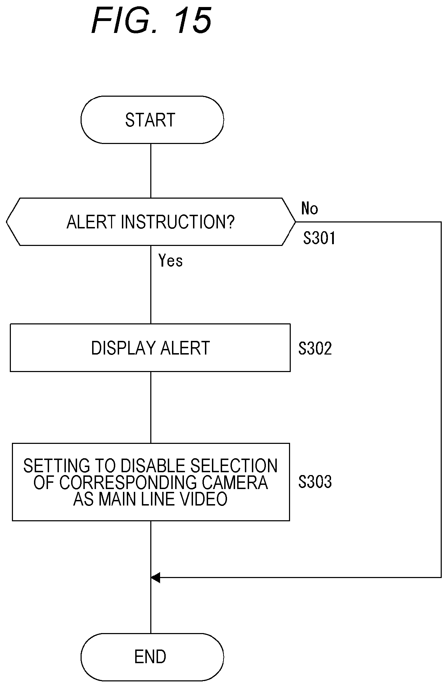

Furthermore, the GUI device 11 may perform processing corresponding to the alert instruction signal as illustrated in Fig. 15.

In the case of receiving the alert instruction signal, the GUI device 11 proceeds from step S301 to step S302 and displays the alert on the display unit. As a result, the director or the like is notified that translation has occurred in the camera 2.

Moreover, in step S303, the GUI device 11 sets the camera 2 (the translated camera 2), which is the target of the alert instruction, to disable the selection as the main line video.

For example, for the captured video V1 of the corresponding camera 2, the selection operation for the main line video cannot be performed in the GUI device 11 or the control panel 10.

Note that although the GUI device 11 performs the non-selectable setting in response to the alert instruction signal in the above description, it can also be said that the alert instruction signal has a meaning as an instruction signal of the non-selectable setting. That is, it can be said that the CCU 3 instructs the GUI device 11 to set the non-selectable setting as the main line video.

Moreover, in a case where it is considered as the instruction signal of the non-selectable setting, in the GUI device 11, the non-selectable setting as the main line video is performed for the translated captured video V1 of the camera 2, but the alert output is not particularly performed.

Furthermore, the switcher 13 may perform the non-selectable setting not to set the captured video V1 of the translated camera 2 as the main line video according to the instruction signal of the non-selectable setting.

By the processing of Figs. 13, 14, and 15 described above, when translation occurs in the camera 2 on the premise that translation does not occur, it is possible to notify the camera operator, the director, or the like of the translation.

In response to this, the camera operator can take measures such as returning the position of the camera 2 to the original position. The director or the like can instruct the camera operator to return to the position, or can take a measure of not selecting the captured video V1 of the corresponding camera 2 as the main line video. In a case where the processing of Fig. 15 is performed, it is also possible to prevent a director or an engineer from erroneously setting the captured video V1 of the corresponding camera 2 as the main line video.

After the translation occurs, in order to return to a state where the AR superimposition is appropriately performed, the following two return methods are conceivable.

### • First return method

The camera 2 is returned to the initial position (position before translation). In this case, it is confirmed whether the camera position has returned by matching the pre-translation environment map 35 with the newly created environment map 35. Then, in a case where the return can be confirmed, the environment map 35 before translation is updated again.

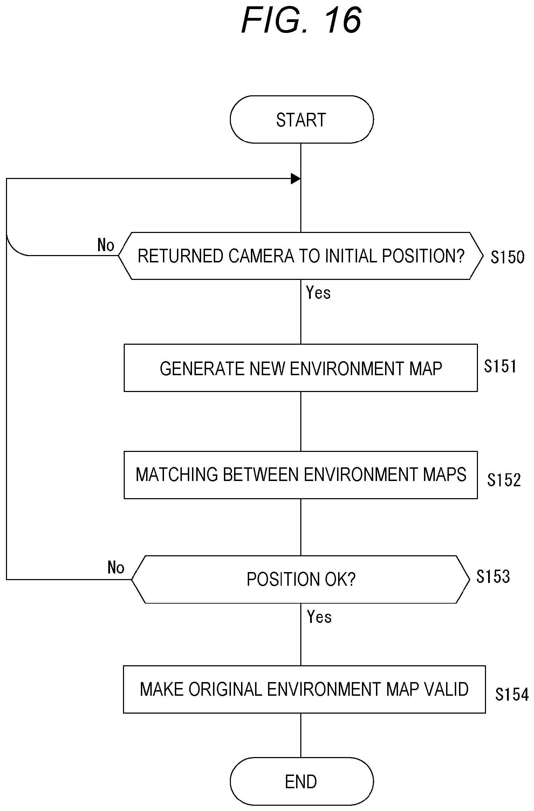

The processing of the CCU 3 (AI board 4) in this case is illustrated in Fig. 16. For example, the process of Fig. 16 is performed by the function of the drift determination unit 4b.

In step S150, the CCU 3 determines to start the confirmation processing according to some trigger. That is, it is determined whether or not the operation of returning the camera 2 to the initial position has been performed. Then, the process proceeds to step S151 in response to the operation of returning to the initial position.

For example, in a case where the camera operator returns the position of the camera 2 to the original position according to the alert and then performs a predetermined operation, the processing may proceed to step S151 assuming that an operation of returning the camera 2 to the initial position has been performed. Alternatively, when translation of an equivalent translation amount in a direction opposite to the detected translation is detected, the process may proceed to step S151 assuming that the operation of returning the camera 2 to the initial position has been performed.

In step S151, the CCU 3 performs processing of creating a new environment map 35. For example, the CCU 3 transmits an instruction to perform imaging to the camera 2 while rotating the camera 2 by 360 degrees, and generates the environment map 35 using the video data obtained by the instruction.

After generating the new environment map 35, the CCU 3 performs matching between the original environment map 35 used so far and the new environment map 35. If the two environment maps 35 match, it can be determined that the camera 2 has correctly returned to the initial position before translation.

In this case, the CCU 3 proceeds from step S153 to step S154, and the original environment map 35 is made valid, and is used for the drift determination thereafter.

If the two environment maps 35 do not match, the CCU 3 returns from step S153 to step S150 and waits for the camera 2 to return to the initial position. Then, in response to the detection of the return to the initial position, the confirmation processing in steps S151, S152, and S153 is performed again.

As described above, in response to the camera 2 accurately returning to the initial position after translation, it is possible to return to a state in which the AR superimposed video V2 with high accuracy for the captured video V1 of the camera 2 can be generated.

Note that, in a case where the setting to disable selection of the main line video is performed as illustrated in Fig. 15, the CCU 3 may transmit a signal permitting the captured video V1 of the camera 2 to be the main line video to the GUI device 11 and the control panel 10 in step S154 of Fig. 16. In response to this, the GUI device 11 and the control panel 10 cancel the setting of the main line video disabled.

### • Second return method

For example, it is conceivable that the AR system 5 adjusts the position of the camera 2 (viewpoint position of the CG video) in accordance with the position of the camera 2 after translation in the three-dimensional space in the AR system 5 in response to receiving the alert instruction signal caused by translation.

That is, the position of the camera 2 is changed to a new position in the space where the CG video is rendered, instead of returning the position of the camera 2 as in the first return method described above. As a result, it is possible to generate the CG image matching the viewpoint of the captured video V1 at the position after translation of the camera 2 and generate the AR superimposed video V2.

Note that, in this case, the environment map 35 is newly created at the position of the camera 2 after translation.

### <4. Summary and modifications>

According to the above-described embodiments, the following effects can be obtained.

The information processing apparatus 70 as the CCU 3 of the embodiment includes the translation determination unit 4a that determines whether or not there is the translational movement forward/backward, left/right, or up/down from the fixed position on the basis of the sensing data indicating the state of the camera 2 whose image capturing position is fixed.

In a case where the AR superimposed video V2 is generated by combining the CG video with the captured video V1 which is the live image, the AR system 5 determines the displacement of the yaw, pitch, and roll of the camera 2, specifies the visual field of the camera 2, generates the CG video corresponding thereto, and combines the CG video at an appropriate position in the captured video V1.

Therefore, if there is a drift in the information of the IMU 20, the AR system 5 cannot perform accurate AR superimposition. In order to prevent such a situation from occurring, the metadata MT in which the drift of the IMU 20 is corrected is obtained using the environment map 35 so that the AR system 5 can acquire the metadata MT. However, when the translation of the camera 2 occurs, a mismatch with the environment map 35 occurs in the first place, and the drift of the detection information of the IMU cannot be corrected. Therefore, it is necessary to determine a situation in which such a mismatch has occurred.

By providing the translation determination unit 4a, it is possible to detect the state in which the mismatch occurs by detecting the translation of the fixed camera 2.

Note that the bird's-eye view video V3 including the view frustum 40 has been described with reference to Figs. 9, 10, and 11. The translation of the camera 2 also affects the accuracy of the view frustum 40, since this view frustum 40 also changes direction depending on the attitude information of the camera 2. Therefore, it is effective that the translation determination unit 4a performs the translation determination in the system that displays the bird's-eye view video V3 including the view frustum 40.

In the embodiment, the translation determination unit 4a outputs the alert instruction signal in the case of determining that there is translational movement.

When it is determined that there is translation of the camera 2, this means that it is determined that mismatching between the position of the camera 2 and the environment map 35 has occurred. Therefore, the CCU 3 (AI board 4) outputs the alert instruction signal according to the translation determination, so that the warning of the mismatch state is promptly performed.

In the embodiment, it has been described that the translation determination unit 4a transmits the alert instruction signal to the camera 2. The CCU 3 including the translation determination unit 4a transmits an alert instruction signal to the camera 2 to cause a viewfinder or the like of the camera 2 to display an alert. As a result, it is possible to present the camera operator that the state is in the mismatch state. The camera operator can recognize that it is necessary to take measures to resolve the mismatch state.

Note that the alert performed by the camera 2, the GUI device 11, or the like is not limited to the alert display, and may be an alert by voice. Furthermore, the alert display is not limited to the screen display and may be an indicator display.

In the embodiment, it has been described that the translation determination unit 4a transmits the alert instruction signal to the interface device for instructing video production related to imaging by the camera 2.

The CCU 3 including the translation determination unit 4a outputs an alert instruction signal to an interface device used by a director such as the GUI device 11 or the master monitor 14, for example, and causes these devices to display an alert. As a result, it is possible to present the director or the like that the state is in the mismatch state.

Since the director or the like can recognize the mismatch state, for example, it is possible to take a measure such that the captured video V1 of the corresponding camera 2 is not selected as the main line video.

In the GUI device 11 or the control panel 10, it is also possible to automatically perform setting not to select the captured video V1 of the corresponding camera 2 as the main line video in response to the alert instruction (see Fig. 15).

As a result, it is possible to prevent the AR superimposed video V2 with low accuracy from being broadcast and distributed.

The system of the embodiment supplies the captured video V1 (live-action video) of the camera 2 to the AR system 5 that combines the virtual video on the basis of the 3Dof motion information of the camera 2.

In a recent AR superimposed video generation system, information is acquired by 6Dof, and an AR video is generated corresponding to yaw, pitch, rotation of a roll, and forward and backward, left and right, and up and down movements. On the other hand, in the present embodiment, the camera 2 is assumed to be fixedly disposed by the tripod 6 or the like. Therefore, the movement of the camera 2 can be determined by the 3Dof information. The CG video in the AR superimposed video V2 may be generated on the basis of the 3Dof information.

Furthermore, for this reason, the attitude determination for the display of the view frustum 40 can also be limited to 3Dof of yaw, pitch, and roll, and information acquisition of 6Dof is not performed.

Therefore, the system of the present embodiment is 6Dof, so there is no need to include a sub-camera for acquiring parallax information or transmit the captured video. As a result, the CCU 3 may transmit only the video data of the captured video V1 of the camera 2 to the AR system 5 as the video data, and the system configuration can be simplified.

In the embodiment, the translation determination unit 4a acquires the acceleration information of the camera 2 as the sensing data and determines the presence or absence of the translational movement.

Since the AR system 5 generates the CG video on the basis of the information of 3Dof, the AR system 5 does not determine the translation of the camera 2 by the information of 6Dof. Therefore, translation is determined using acceleration information from the IMU 20. This enables an alert based on translation determination without hindering simplification of the system configuration.

Note that there is also a translation detection method using information other than the acceleration information. For example, translation can be detected from the captured video V1 as image recognition (feature point detection, optical flow), AI processing, or the like.

By the way, the position change can be estimated by a technique such as simultaneous localization and mapping (SLAM), but in the system on the premise of the current fixation with the tripod 6, an additional configuration for SLAM or the like is not required, so that an advantage that the peripheral configuration of the camera 2 can be simplified can be obtained. Therefore, a technique using acceleration information or a technique such as image recognition that does not require additional equipment is desirable for the translation determination.

In the embodiment, the translation determination unit 4a inputs sensing data from the camera 2 whose image capturing position is fixed by the tripod 6 and which can be displaced in some or all of the directions of yaw, pitch, and roll. When the camera 2 is fixed by the tripod 6 and is displaceable in each direction of yaw, pitch, and roll or a part thereof, the system configuration is simplified.

Note that the camera 2 is not necessarily fixed to the tripod 6. For example, the technique of the present disclosure can also be applied to imaging by a camera fixedly installed in a facility or the like, a camera disposed at a predetermined position without using the tripod 6, or the like.

The information processing apparatus 70 as the CCU 3 of the embodiment includes the drift determination unit 4b that calculates the drift amount of the attitude information from the camera 2 and transmits the drift amount to the camera 2.

The drift determination unit 4b determines the drift amount of the attitude information and corrects the attitude information from the camera 2, so that the accuracy of the attitude information is improved and the accurate AR superimposed video V2 can be generated. Therefore, the alert by the translation determination has meaning.

In the embodiment, the drift determination unit 4b calculates the drift amount of the attitude information using the environment map 35 in which the feature points and the feature amounts are mapped on the virtual dome created according to the position of the camera 2.

By comparing the feature point and the feature amount on the environment map 35 indicated by the attitude information with the feature point and the feature amount of the captured video V1, if the feature point and the feature amount are deviated, it means that the drift has occurred. Therefore, the drift amount can be calculated by using the environment map 35.

In the embodiment, an example has been described in which the drift determination unit 4b performs processing of creating the new environment map 35 according to the return of the position of the camera 2 after the determination of the presence of the translational movement, that is, after the output of the alert instruction signal, and confirming the return of the position of the camera 2 by comparing the used environment map 35 and the newly created environment map 35 (See Fig. 16.).

As a result, it is possible to accurately determine whether or not the camera 2 has returned to the original position before the translation determination.

In the embodiment, in a case where the translation determination unit 4a determines that there is the translational movement, the translation determination unit 4a outputs the instruction signal that disables selection of the captured video V1 by the camera 2 that has been translated as the output video (See Fig. 15.). That is, it is not selected as the main line video.

Determining that there has been translation of the camera 2 means that a mismatch between the position of the camera 2 and the environment map 35 has occurred, and due to this, it has been determined that video quality is degraded. Therefore, the CCU 3 (AI board 4) instructs, for example, the GUI device 11 to perform the non-selectable setting as the main line video according to the translation determination. Alternatively, according to the translation determination, the CCU 3 (AI board 4) may perform the deselection setting of not setting the captured video V1 of the camera 2 translated with respect to the switcher 13 as the main line video.

As a result, the main line video to be output can be prevented from including a video in a state where the quality has deteriorated.

The imaging system of the an embodiment includes: the camera 2 whose image capturing position is fixed and which performs image capturing and outputs video data of a captured video V1; a first information processing apparatus (CCU 3) including the translation determination unit 4a that determines whether or not there is a translational movement forward/backward, left/right, or up/down from the fixed position of the camera 2 on the basis of sensing data indicating a state of the camera 2; and a second information processing apparatus (AR system 5) which performs processing of combining a virtual video with the captured video V1 by the camera 2.

Furthermore, the GUI device 11 is provided as an interface device for a video production instruction.

In such a system that does not assume translation of the camera 2, the translation determination is performed using, for example, acceleration information without using an additional device for the translation determination. That is, by performing translation detection without an additional configuration in a system that does not originally assume translation of the camera 2, it is possible to achieve both detection of a decrease in accuracy of the AR superimposed video V2 and simplification of the system.

Note that, in the embodiment, the CCU 3 (AI board 4) has the functions of the translation determination unit 4a and the drift determination unit 4b, but an information processing apparatus other than the CCU 3 may include the translation determination unit 4a and the drift determination unit 4b to perform the above-described processing. An example in which the camera system 1 or 1A does not include the CCU 3 is also conceivable.

Furthermore, although the IMU 20 has been described as an example of being built in the camera 2, an example in which a device having the IMU 20 separate from the camera 2 is coupled to the camera 2 and operated is also conceivable. For example, the tripod 6 may be provided with an IMU 20. Furthermore, in a case where an attachment to the camera 2 is attached, there is also an example in which the IMU 20 is provided in the attachment.

The program of the embodiment is a program for causing a processor such as a CPU or a DSP, or a device including the processor to execute the processing of the CCU 3 (AI board 4) illustrated in Figs. 7, 13, and 16, the processing of the camera 2 or the like illustrated in Figs. 8 and 14, and the processing of the GUI device 11 pr the like illustrated in Fig. 15.

In particular, one of the programs of the embodiments is a program for causing an information processing apparatus to execute processing of determining whether or not there is a translational movement forward/backward, left/right, or up/down from a fixed position on the basis of sensing data indicating a state of a camera that captures a live-action video to be combined with a virtual video and whose image capturing position is fixed. As a result, the information processing apparatus 70 is caused to execute the processing of Fig. 13.

Such a program can be recorded in advance in an HDD as a recording medium built in a device such as a computer apparatus, a ROM in a microcomputer having a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as what is called package software.

Furthermore, such a program may be installed from the removable recording medium into a personal computer and the like, or may be downloaded from a download site through a network such as a local area network (LAN) or the Internet.

Furthermore, such a program is suitable for providing the information processing apparatus 70 of the embodiments in a wide range. For example, by downloading the program to a personal computer, a communication apparatus, a portable terminal apparatus such as a smartphone or a tablet, a mobile phone, a gaming device, a video device, a personal digital assistant (PDA), or the like, it is possible to cause these apparatuses to function as the information processing apparatus 70 of the present disclosure.

Note that the effects described in the present specification are merely examples and are not limited, and other effects may be provided.

Note that the present technology can also have the following configurations.
(1) An information processing apparatus including
   a translation determination unit that determines whether or not there is a translational movement forward/backward, left/right, or up/down from a fixed position on the basis of sensing data indicating a state of a camera that captures a live-action video to be used for combination with a virtual video and whose image capturing position is fixed.
(2) The information processing apparatus according to (1) described above, in which
   the translation determination unit outputs an alert instruction signal in a case of determining that there is the translational movement.
(3) The information processing apparatus according to (2) described above, in which
   the translation determination unit transmits the alert instruction signal to the camera.
(4) The information processing apparatus according to (2) or (3) described above, in which
   the translation determination unit transmits the alert instruction signal to an interface device that instructs video production related to imaging by the camera.
(5) The information processing apparatus according to any one of (1) to (4) described above, in which
   a live-action video of the camera is supplied to a virtual video generation engine that combines a virtual video on the basis of motion information of the camera in three degrees of freedom.
(6) The information processing apparatus according to any one of (1) to (5) described above, in which
   the translation determination unit acquires acceleration information of the camera as the sensing data and determines whether or not there is the translational movement.
(7) The information processing apparatus according to any one of (1) to (6) described above, in which
   the translation determination unit inputs the sensing data from the camera in which an image capturing position is fixed by a tripod and that is displaceable in part or in all of directions of yaw, pitch, and roll.
(8) The information processing apparatus according to any one of (1) to (7) described above, further including
   a drift determination unit that calculates a drift amount of attitude information from the camera and transmits the drift amount to the camera.
(9) The information processing apparatus according to (8) described above, in which
   the drift determination unit calculates the drift amount of the attitude information using an environment map in which feature points and feature amounts are mapped on a virtual dome created according to a position of the camera.
(10) The information processing apparatus according to (8) or (9) described above, in which
   the drift determination unit performs processing of creating a new environment map according to return of a position of the camera after the translation determination unit determines that there is the translational movement, and confirming return of the position of the camera by comparing a used environment map with the newly created environment map.
(11) The information processing apparatus according to any one of (1) to (10) described above, in which
   in a case of determining that there is the translational movement, the translation determination unit outputs an instruction signal that disables selection of a video captured by the camera that has been translated as an output video.
(12) An imaging system including:
   a camera whose image capturing position is fixed and that performs image capturing and outputs video data of a captured video;
   a first information processing apparatus including a translation determination unit that determines whether or not there is a translational movement forward/backward, left/right, or up/down from a fixed position of the camera on the basis of sensing data indicating a state of the camera; and
   a second information processing apparatus that performs processing of combining a virtual video with a video captured by the camera.
(13) The imaging system according to (12) described above, further including
   an interface device that instructs video production.
(14) An information processing method including
   determining, by an information processing apparatus, whether or not there is a translational movement forward/backward, left/right, or up/down from a fixed position on the basis of sensing data indicating a state of a camera that captures a live-action video to be used for combination with a virtual video and whose image capturing position is fixed.
(15) A program for causing an information processing apparatus to execute
   processing of determining whether or not there is a translational movement forward/backward, left/right, or up/down from a fixed position on the basis of sensing data indicating a state of a camera that captures a live-action video to be used for combination with a virtual video and whose image capturing position is fixed.

### REFERENCE SIGNS LIST

- 1, 1A: Camera system
- 2: Camera
- 3: CCU
- 4: AI board
- 4a: Translation determination unit
- 4b: Drift determination unit
- 5: AR system
- 6: Tripod
- 10: Control panel
- 11: GUI device
- 12: Network hub
- 13: Switcher
- 14: Master monitor
- 20: IMU
- 25: Transmission/camera control unit
- 35: Environment map
- 40: View frustum
- V1: Captured video
- V2: AR superimposed video
- V3: Bird's-eye view video
- 70: Information processing apparatus
- 71: CPU

## Claims

1. An information processing apparatus comprising
a translation determination unit that determines whether or not there is a translational movement forward/backward, left/right, or up/down from a fixed position on a basis of sensing data indicating a state of a camera that captures a live-action video to be used for combination with a virtual video and whose image capturing position is fixed.

2. The information processing apparatus according to claim 1, wherein
the translation determination unit outputs an alert instruction signal in a case of determining that there is the translational movement.

3. The information processing apparatus according to claim 2, wherein
the translation determination unit transmits the alert instruction signal to the camera.

4. The information processing apparatus according to claim 2, wherein
the translation determination unit transmits the alert instruction signal to an interface device that instructs video production related to imaging by the camera.

5. The information processing apparatus according to claim 1, wherein
a live-action video of the camera is supplied to a virtual video generation engine that combines a virtual video on a basis of motion information of the camera in three degrees of freedom.

6. The information processing apparatus according to claim 1, wherein
the translation determination unit acquires acceleration information of the camera as the sensing data and determines whether or not there is the translational movement.

7. The information processing apparatus according to claim 1, wherein
the translation determination unit inputs the sensing data from the camera in which an image capturing position is fixed by a tripod and that is displaceable in part or in all of directions of yaw, pitch, and roll.

8. The information processing apparatus according to claim 1, further comprising
a drift determination unit that calculates a drift amount of attitude information from the camera and transmits the drift amount to the camera.

9. The information processing apparatus according to claim 8, wherein
the drift determination unit calculates the drift amount of the attitude information using an environment map in which feature points and feature amounts are mapped on a virtual dome created according to a position of the camera.

10. The information processing apparatus according to claim 8, wherein
the drift determination unit performs processing of creating a new environment map according to return of a position of the camera after the translation determination unit determines that there is the translational movement, and confirming return of the position of the camera by comparing a used environment map with the newly created environment map.

11. The information processing apparatus according to claim 1, wherein
in a case of determining that there is the translational movement, the translation determination unit outputs an instruction signal that disables selection of a video captured by the camera that has been translated as an output video.

12. An imaging system comprising:
a camera whose image capturing position is fixed and that performs image capturing and outputs video data of a captured video;
a first information processing apparatus including a translation determination unit that determines whether or not there is a translational movement forward/backward, left/right, or up/down from a fixed position of the camera on a basis of sensing data indicating a state of the camera; and
a second information processing apparatus that performs processing of combining a virtual video with a video captured by the camera.

13. The imaging system according to claim 12, further comprising
an interface device that instructs video production.

14. An information processing method comprising
determining, by an information processing apparatus, whether or not there is a translational movement forward/backward, left/right, or up/down from a fixed position on a basis of sensing data indicating a state of a camera that captures a live-action video to be used for combination with a virtual video and whose image capturing position is fixed.

15. A program for causing an information processing apparatus to execute
processing of determining whether or not there is a translational movement forward/backward, left/right, or up/down from a fixed position on a basis of sensing data indicating a state of a camera that captures a live-action video to be used for combination with a virtual video and whose image capturing position is fixed.
